# EUROPEAN PATENT APPLICATION

(11) **EP 4 685 220 A1**
(43) Date of publication of application: **28.01.2026**
(21) Application number: 24191318.5
(22) Date of filing: 27.07.2024
(51) Int. Cl.: C12C 7/165, C12C 13/10

(54) **AN ENHANCED SYSTEM FOR SMALL BATCH BEER BREWING**

(71) Applicant: Mort Holding ApS, 9530 Støvring (DK)
(72) Inventor: Christensen, Morten Olesen, 9530 Støvring (DK)
(74) Representative: Høyer, Michael

(57) **Abstract**

A kettle for small batch brewing of beer with an enhanced efficiency of preparing the wort and avoiding clogging of filters, tubing and pumping arrangement. The kettle features a sprinkler arranged between a bottom filter and a top filter that facilitates the extracted wort to flow in both a downward and/or upward direction in the kettle for a more efficient recirculation in the mash which ensures a better exploitation of the malt.

## Description

### Technical Field

The invention relates to equipment for small batch beer brewing. It especially relates to enhancements in providing a better mash efficiency when it comes to processing the mash preparing the wort to be used for beer fermentation.

### Background

Beer brewing is a craft that has been performed for centuries and the beverage product beer is well accepted in the market and typically produced in large scale factories by multinational companies. Huge investments are put into developing cheap production methods of beer producing beer that always have the same tasting profile and a tasting profile that are accepted by the consumers. The development goes in the direction of breweries being transformed into computer controlled chemical factories that facilitates a quick production.

Home brewing of beer has earlier been known for producing beer that was of a questionable and fluctuating quality.

However, as a movement against the monopoly of the large scale produced beers that often has a neutral, tending to be boring tasting profile, quite a few microbreweries have started up and are well accepted by the consumers even though a significant higher price is claimed for the products than for the mass-produced products. What characterises the microbreweries is a higher quality of the product and a large variety of tasting profiles where the consumer is introduced to new and experimental brews with surprising tasting profiles.

This tendency has also brought new interest for small batch brewing since with new developed equipment it is now possible to brew your own beer of high quality that stands out from the large scale produced beer by having its own desired signatory tasting profile.

When it comes to the ingredients for brewing, some small batch brewers acquire a prefabricated kit with all the ingredients as e.g. extracted malt and hops for providing a wort for the brew together with a suitable yeast. Simplified explained they put it all in a brew pot, also referred to as a fermentation vessel, and add water and put a bubble airlock on the brew pot and start the fermentation process. When the yeast has transformed a suitable portion of the carbohydrates into alcohol the process is stopped. This process can be stopped by itself by the alcohol destroying the yeast or when the wort is fully fermented. This process typically takes from a few days to several weeks. However, the average is that it takes about 2 weeks. After a time of storage, the beer is ready to be consumed.

For the sake of understanding, the main skills and core of brewing beer is to produce the carbohydrate rich malt out of the grain which traditionally is done by causing grain to germinate and enhance the process of starch being transformed into carbohydrates.

More sophisticated small batch brewers prefer to make their own malt out of raw grain. The grain can after germination be processed in various ways, e.g. by drying, roasting or smoking before being rolled and/or grinded.

For small batch brewers it is also possible to buy prefabricated malts and make your own mixture of malts to provide a mash for extracting wort and combining with preferred yeasts as a selection tailored for achieving the desired tasting profile.

The wort is prepared by heating up the malt in a water solution producing a mash whereby the flavour and the carbohydrates is extracted from the malt into the fluid wort. It must be noted that the grade of milling the malt also influences the efficiency of getting the carbohydrates and the flavour out of the malt. When the mashing process is completed, the wort is separated from the depleted malt and are ready for the next process step where the hops are added. In this next step the wort is brought to boil and hops are added during the process. The hops add bitterness and aroma to the wort and the bitterness and aroma achieved is heavily influenced by the period of time the wort is being boiled. The heating process additionally serves to produce a sterile wort without any leftovers from the mash and hop ingredients that could initiate growth of bacteria or fungus in the fermentation process.

After allowing time for cooling the wort, the extracted wort is ready to be put on a pot for fermentation.

However, there are still a lot of pitfalls when it comes to home brewing of beer which can challenge the quality of the brew. One thing is the fermentation process transforming the carbohydrates into alcohol. The process can be controlled in various ways as e.g. controlling the temperature which influences the tasting profile of the brew.

This application will not focus on the fermentation process but on providing the wort from the malt through the mash.

Ideally, the wort is produced by heating the mash (malt and water) in a pot or kettle and stir. The heating temperature is chosen and controlled according to the temperature where the desired enzymes are active and best mode performing the job of breaking down starches and creating soluble sugars into the wort. The temperature range during the entire mash process, typically varies in the range between 50 to 80 degrees Celsius, where the heating temperature can be altered through the process.

Stirring the mash is either done manually or by costly equipment in form of motors and transmission and because of heating the mash, there is a risk that the mash will be heated excess in the lower parts of the pot, where the heating means are arranged. Thus, the most appreciated embodiments of brew kettles include at least one pump for circulation the wort from a lower part of the kettle to the top of the kettle sprinkling the mash, the fluid wort continuing to penetrate through the mash, permeating the mash and taking up more and more carbohydrates and flavour for each time it goes through this cycle. A grate or filter is inserted into the kettle above the bottom of the kettle for separating the wort from the mash and to avoid solid parts from the mash to enter the area of the heating part and the inlet of the pump thus avoiding clogging the tubes and the pump.

Using pumping technology has enhanced the process and the need for stirring the mash has decreased. However, some challenges have been discovered which highly influences the quality of the wort and the efficiency of extracting the carbohydrates and the flavour.

When the malt is processed, (rolled, grinded, milled) parts of it will have the form of small particles like powder. The fine structure of the malt in the mash enhances the efficiency of the extraction of carbohydrates and flavour in the brew, but the fine structure of the ingredients facilitates clogging. Even though, when the grinding grade of the malt is quite corny, the brewing of the malt adding heat, makes parts of the mass into a porridge-like structure that is more compact towards the bottom because of the own weight of the malt column. Additionally, a floating top layer is built where the sprinkled wort cannot penetrate down through and permeate the mash. The sprinkled wort just stays on top of the mash or finds its way in a channel in the mash that leads the fluid wort down to the heater and pumping section for being pumped back on top of the mash without any effect. Firstly, this situation with "dead zones" in the mash will not fully exploit the ingredients to its full potential when it comes to the yield, since the desired substances are not fully extracted from the ingredients into the wort. This is because of the mash not being homogeny permeated or soaked through by the wort. Secondly, the heat that the wort transfer to the mash will not be evenly distributed and the enzymes in the "dead zones" will not have the ideal conditions for performance. When it comes to the grate or filter it should be configured with care to not letting too corny parts pass through and likewise it should be so open that it will not be clogged to easily by minor particles that are desired absorbed in the wort for use in the brewing process.

Additionally, a low flow rate of the wort will have further disadvantages when it comes to the flow through the heating area. The carbohydrate rich wort will if heated to excess be caramelized which will have an unwanted effect on the flavour and colour of the wort and part of the caramelized sugar will stick to the kettle, the tubing and the pump and make the important task of cleaning difficult and time consuming.

### Summary:

Thus, there seems to be a need for a solution that overcomes the above-mentioned disadvantages and problems. Therefore, it is the object of the embodiments of the invention to provide a system for extracting wort from mash, that in a better way secures that the wort during brewing penetrates and permeates the entire mash and avoids clogging of the separation grate or filter, the tubes and the pumping system where the clogging will have a negative effect on the flowrate of the circulated wort.

According to embodiments of the invention the object is achieved in a kettle for preparing wort for brewing beer comprising a kettle vessel having a fixed bottom and a first filter arranged inserted in a first height above the fixed bottom for separating the mash and the wort and a second filter and/or a third filter arranged inserted in a second height above the fixed bottom for separating the mash and the wort, the first and the second filters defining a volume in the kettle between the first filter and the second filter configured to be filled with the mash, defining a space in the kettle between the first filter and the fixed bottom for collection of wort, where the second filter is having a fluid connection to the enclosure between the first filter and the fixed bottom of the kettle, the kettle further comprising a heater arranged with the kettle in such a way that it can supply the kettle with heat and a pump arrangement arranged with the kettle for pumping the wort, the pump arrangement having an inlet arranged between the first filter and the fixed bottom of the kettle and an outlet arranged in position between the first filter and the second filter in such a way as to pump the wort from the collection point and back into the mash for further permeation of the mash and extraction of desired substances from the mash into the wort.

Investigations have, contrary to expectations, shown that the wort infused in a point approximately in the middle of the mash because of pump pressure will not only penetrate in the direction of gravity but also in other directions, sidewards and upwards and lead to a better penetration of the mash and enhanced extraction of carbohydrates and aroma from the mash. Especially if the first filter clogs the fluid wort will seek to travel up in the mash where it can escape through the second filter and be recirculated. The clogging of the first filter and the appearance of the mash being porridge like appears short time after starting the brew but as time passes and the carbohydrates are extracted out of the mash, the sticky clogging effect is diminished, and parts of the malt transform into light fibres that will flow upwards in the brew and build a floating top layer if not stirred or forced into the wort. There are still desired ingredients in the malt of the floating top layer to be extracted.

In an embodiment, the kettle further comprises an insert pot configured to fit into the kettle vessel and where the first filter is comprised in the insert pot and where the first filter is formed in the bottom of the insert pot and where the second filter is formed in the sidewall of the insert pot and where the insert pot is configured with a stop that secures the insert pot in a position in the kettle where the bottom of the insert is arranged in a predefined position over the fixed bottom of the kettle, so as to form a volume for collection of wort at the bottom of the kettle.

This embodiment is appreciated since the first and the second filter are both embodied in the same item and thus reduces the complexity of the kettle. Additionally, an insert pot is practical since it can after brewing the wort be taken out of the kettle with the full content of mash and sprinkler system whereafter the kettle can be used for boiling the wort adding the hops.

In an embodiment of the kettle, the second filter is a can filter where the outer part is configured as to be an inlet and where the inner part is configured as an outlet and where the filter is attached to a tube for returning the wort to the enclosure between the first filter and the bottom of the kettle.

This embodiment has the advantage of the can filter being compact and thus gives room for access to the brew if stirring is needed or it is desired to add additional ingredients to the brew during brewing. If the filter is clogged it is easily accessible and can be exchanged or cleaned without difficulty.

In embodiments of the kettle the first filter and/or the second filter is configured as an insert to be arranged directly in the kettle vessel or in the insert pot and that the insert is configured as a perforated sheet of metal, plastic or rubber, a casted metal or plastic grate, a woven or nonwoven textile mesh or a wire braid.

It is an advantage to form the filters as inserts since they are easy to take out after brewing for cleaning. Additionally, it makes it possible to strip the kettle completely from items which makes it possible to clean thoroughly which secures a good quality of the brew.

In embodiments of the kettle, the pump outlet comprises at least one distribution unit with multiple ports, diffusers or nozzles, so as to accomplish a homogeneously distribution of the wort into the mash.

It is desired that the recirculated wort is distributed evenly into the mash for better mash efficiency and to avoid clogging which is accomplished by separating the wort flow into smaller infusion streams. This will ensure a high mash efficiency during the mashing process and ensure that the process can be repeated with approximately identical result each time a recipe is brewed without the need of mechanical or manual stirring in the mash.

This effect is enhanced by embodiments of the kettle the kettle further comprises at least one tube configured with a number of diffusers or nozzles, where the at least one tube is adapted to interface and connect with one of the ports in the distribution unit.

The prolongation of the sprinkler means has the advantage of providing more diffusers or nozzles and thus achieving a more homogeneous recirculation of the wort into the mash. Additionally, it makes it possible to disassemble the diffusers or nozzles from the distribution unit and clean them individually after use. It also has the advantage that the diffusers or nozzles can be changed to fit different brew kettles, thinner or wider, without changing the core distribution unit.

The diffusers or nozzles arranged on the at least one tube is in embodiments of the kettle configured to point out from the at least one tube and are distributed over the length of the tube. The directions can be all the 360 degrees around the tube and the pointing angle out of the tube can also vary all 180 degrees as desired to achieve a homogeneous distribution of the wort into the mash.

The at least one tube adapted to interface and connect with one of the ports in the distribution unit is in embodiments of the kettle made of glass, copper, aluminium, stainless steel or a plastic material. The material is selected with a desire to produce a price optimal product and a product that can easily be cleaned and is mechanically robust.

In embodiments of the kettle, the ports in the distribution unit are arranged in such a way on the distribution unit to form a star when the tubes are attached. A star form serves to distribute the wort into the mash in a homogenous way and works very well for brew kettles where the height and diameter ratio is towards a larger diameter

However, the meandering travel forms of the tube can also perform, so in an embodiment of the kettle the at least one tube adapted to interface and connect with one of the ports in the distribution unit is having either a straight course, a helical course or an s-formed course.

A more advanced distribution system with prolonged tubes because of geometry will make it possible to achieve a good mash efficiency even with kettles where the height and diameter ratio is towards a smaller diameter.

In embodiments of the kettle, the pipes are telescopic pipes. This will ease the adjustment of the height of the distribution unit to the exact position in the mash where the recirculated wort is desired to be induced. Additionally, it will enable that the height of the second filter can be adjusted to be partly or fully submerged in the mash. Thus, the telescopic pipes will in an easy way facilitate that the kettle will be efficient with both a smaller and a larger volume of mash in the pot.

In embodiments of the kettle the connection pipe between the pump outlet and the distribution unit is routed in the kettle. If the routing can be made simple it will provide a simpler build up with fewer components which is advantageous when it comes to costs of equipment and to ease of cleaning. It provides a more compact design.

In embodiments of the kettle, the connection pipe between the pump outlet and the distribution unit is routed outside the kettle and entering the kettle vessel from above the rim of the kettle.

This allows the user to easily disconnect the wort recirculation system at the end of the mashing process and make it possible to use the pump to pump the wort to the next pot for further processing of the wort.

In embodiments of the kettle, the connection pipe from the pump outlet to the distribution unit and the return tube for recirculation of the filtered wort to the pump inlet are integrated in one combined unit.

Having a combined unit, where the outlet and inlet of the pump integrates both the return pipe for recirculation of the filtered wort, the connection pipe for supply of recirculated wort and the distribution unit in one combined unit will offer a compact design that allows for more access to the mash during use. This is favourable in case access to the mash in needed during brewing or when the mash needs to be removed at the end of the mashing process.

In embodiments of the kettle, the kettle further comprises a compartment under the kettle bottom and where the pump is arranged in said compartment.

Arranging the pump inside the interior of the kettle makes the design compact and protects the pump from mechanical damage during handling of the kettle. This is especially an advantage during cleaning of the kettle.

In embodiments of the kettle, the kettle further comprises heating means for heating the kettle, where the heating means is arranged under the bottom of the kettle or in the kettle.

Arranging the heating means inside the interior of the kettle makes the design compact and protects the heating means from mechanical damage during handling of the kettle. This is especially an advantage during cleaning of the kettle.

### Brief Description of the Drawings

Embodiments of the invention will now be described more fully below with reference to the drawings, in which
Figure 1 is a cut through view of a kettle for brewing wort featuring a first and a second filter,
Figure 2 shows an embodiment featuring a third filter,
Figure 3 shows an alternative embodiment omitting the second filter,
Figure 4 shows another example of a kettle in an embodiment not featuring an insert pot,
Figure 5 shows a simplified embodiment arranged in an insert pot with an alternative top filter arrangement,
Figure 6 shows another embodiment of the kettle with a different routing of sprinkle wort,
Figure 7 shows another embodiment of the kettle with a can filter and an alternative routing of filtered wort to be circulated by the pump,
Figure 8 shows an embodiment similar to figure 7 but installed in a kettle with no insert pot,
Figure 9 shows an embodiment of the kettle with a helical formed sprinkler,
Figure 10 shows an embodiment of the kettle with two distribution units with sprinklers and
Figures 11 shows an embodiment of the kettle with s-shaped sprinklers.

### Detailed Description

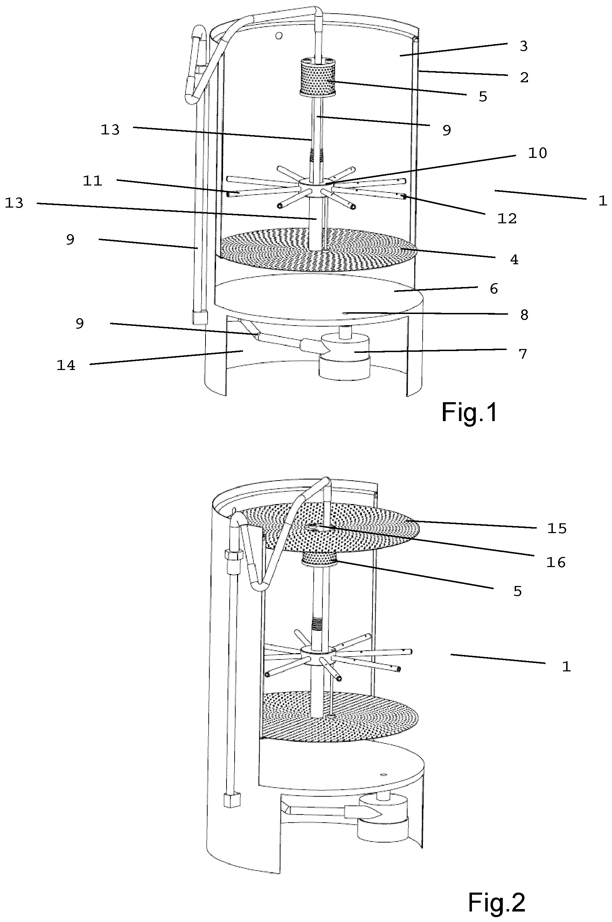

Figure 1 illustrates a first embodiment of the kettle for brewing wort. The kettle 1 is a vessel intended to hold a volume of water and malt to be treated by heat for extracting a carbohydrate- and aroma- rich water solution out of the malt intended for being fermented into beer in a later stage. Part of the kettle front has in the figures been carved out in order to show the details of the kettle 1. The basic component in the kettle is the vessel 2 formed as a pot. The insert pot 3 is configured in measure to allow it for being inserted into the vessel 2. The insert pot 3 is formed as a pot and has perforations in the bottom to form a first filter 4. Different embodiments of the filter will be described later.

Additionally, a second filter 5 is arranged in the insert pot 3. The position of the second filter should be configured in such a way that the filter is submerged at least partly into the mash. The second filter 5 shown is a can type filter. As it can be seen the fluid solution can enter the filter through the outer circumference of the filter and into the can where an outlet in form of a flange is arranged. The flange can easily be connected to a tube or pipe.

Between the bottom 6 of the vessel 2 and the first filter 4 is formed a volume for collection of wort to be circulated in the kettle. The pumping arrangement for circulation of the wort comprises a pump 7 which in the present embodiment is arranged in a compartment 14 in the kettle under the bottom 6 of the kettle. This arrangement should not be considered limiting for the invention since the pump 7 could be arranged outside the kettle and be fluidly interfacing the tubes arranged in the kettle for circulation of the wort. This would allow the kettle to be without the compartment 15 where the kettle could be heated on a conventional heating hob. The pump 7 has an input connected to an opening 8 in the bottom 6 of the vessel 2 through which the wort can flow to the pump 7 and through the pump 7 be forwarded through a connection pipe 9. The connection pipe 9 is in this embodiment routed outside the kettle vessel 2 and enters back into the kettle vessel 2, actually in this embodiment into the insert pot 3, from above where it connects to a distribution unit 10 arranged approximately in position in the middle of the volume of intended mash between the first filter 4 and the second filter 5. As it can be seen from the drawing, the connection pipe 9 can be one fixed pipe, but the user would probably prefer the flexibility it gives when the connection pipe 9 is composed of more pipes connected by pieces of flexible tube to form the complete pipe. The position of the distribution unit 10 might be adjustable. The distribution unit 10 serves as an outlet for the wort pumped by the pump 7. The distribution unit 10 can in itself be configured with openings or nozzles for distribution of the heated wort into the mash. In order to achieve a more homogeneous distribution of the wort into the mash and avoid clogging, the distribution unit 10 can be equipped with prolongations in form of tubes 11. Over the travel of the tubes a number of openings or nozzles 12 can be arranged. Two openings can be seen in the embodiment, but more can be foreseen and facing out in more directions, not just upwards as pictured in the figure. The embodiment also shows a detail of the arrangement of the distribution unit 10 being integrated with the return pipe 13 for returning wort going through the second filter 5. More explicitly, the distribution unit is configured with a hole whereinto the return pipe 13 fits in a tight fit, however allowing for adjustment of the position of the distribution unit 10 height in the vessel. The return pipe 13 goes through a hole in the first filter 4 and are attached to the filter structure in such a manner as to provide mechanical stability to the distribution unit 10 and the attached tubes 11 in a stable position within the kettle 1. In the other end of the return pipe 13 can be seen that it interfaces with the second filter 5 such that filtered wort can pass through down to the bottom of the kettle that serves a s collection point for wort to be heated and circulated. The pipes in the embodiments of the drawings are shown as having a fixed length. However, within the scope of the invention is the use of telescopic pipes. This will ease the adjustment of the height of the distribution unit 10 to the exact position in the mash where the recirculated wort is desired to be induced. Additionally, it will enable that the height of the second filter can be adjusted to be partly or fully submerged in the mash. Thus, the telescopic pipes will facilitate in an easy way that the kettle will be efficient with both a smaller and a larger volume of mash in the pot.

It has to be noted that in order to explain the invention in a simple way, the heating arrangement is not shown in the drawing, but the skilled person will understand that it could be incorporated into the kettle in different ways that will not relate to the invention, or it could as earlier mentioned be an external heating source as a conventional heating hob. The same goes for the control system that measures the temperature and regulates the temperature accordingly to the desired measure.

Figure 2 shows the embodiment of figure 1 but adding a third filter 15. The third filter 15 is an insert to be arranged directly in the kettle vessel 2 or in the insert pot 3 and the outer measure of the third filter 15 is configured as to fit into the kettle vessel 2 or the insert pot 3 in a close fit that does not allow the mash to find a short cut around the filter. The third filter is flat and can be implemented as a perforated sheet of metal, plastic or rubber, a casted metal or plastic grate, a woven or nonwoven textile mesh or a wire braid. As a variant of the filter 4, 15 it is foreseen that it could be built as a racket comprising a frame of a rigid material embracing a filter material of the above mentioned.

The filter 15 has an opening 16 configured to allow the connection pipe 9 to enter through in a downward direction. The third filter is configured to fit into the insert pot 3 or directly into the kettle vessel 2 and serves to put a top pressure on the mash in order to avoid parts of the ingredients to float on the surface and not be processed and utilized to its full potential. As can be seen the third filter 15 will in this embodiment not serve as a filter as such since the wort if it collects over the third filter 15 will not have access to the return pipe 9 and the fluid passage down to the bottom of the kettle for being heated and circulated.

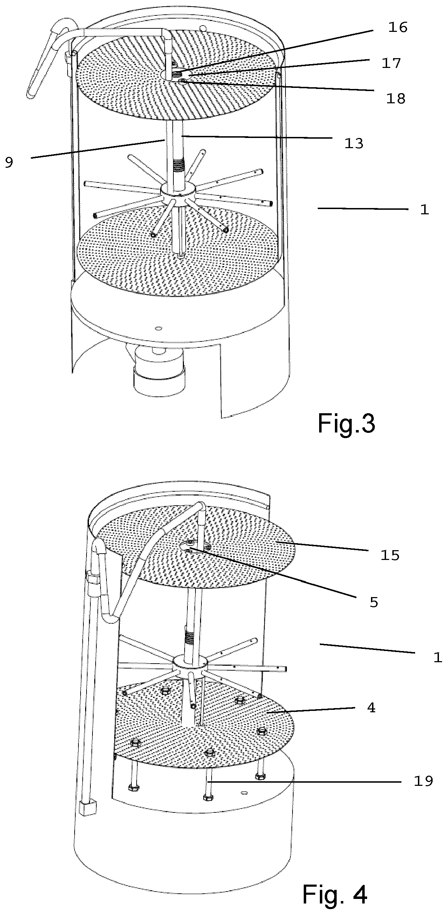

However, in an embodiment of the invention shown in figure 3, such a connection to the return pipe 13 is foreseen and is appreciated. It has an opening 16 in the third filter 15 and a hole 17 for fluid connection to the return pipe 13. A flange 18 is connecting the third filter 15 and the return pipe 13 and providing mechanical stability. Thus, since the third filter now is in position to filter the wort from the mash, the second filter 5 can optionally be omitted. In this case the third filter 15 will take over and in fact be a second filter 5. However, having both the second filter and the third filter will add a greater performance to the system.

Looking at figure 4 it shows the already mentioned features of the previous embodiments. However, it shows a system configured to be inserted directly in the kettle vessel 2. In other words, it does not feature an insert pot 3. The difference is the means for making a distance between the first filter 4 and the bottom of the kettle 6 which here is shown as supporting distance rods 19. The first filter 4 can be identical in construction to the third filter 15 which has been explained earlier with figure 2. This is appreciated since it eases the complexity of the production process and limits the number of different stock numbers. Additionally, it eases the use for the customer.

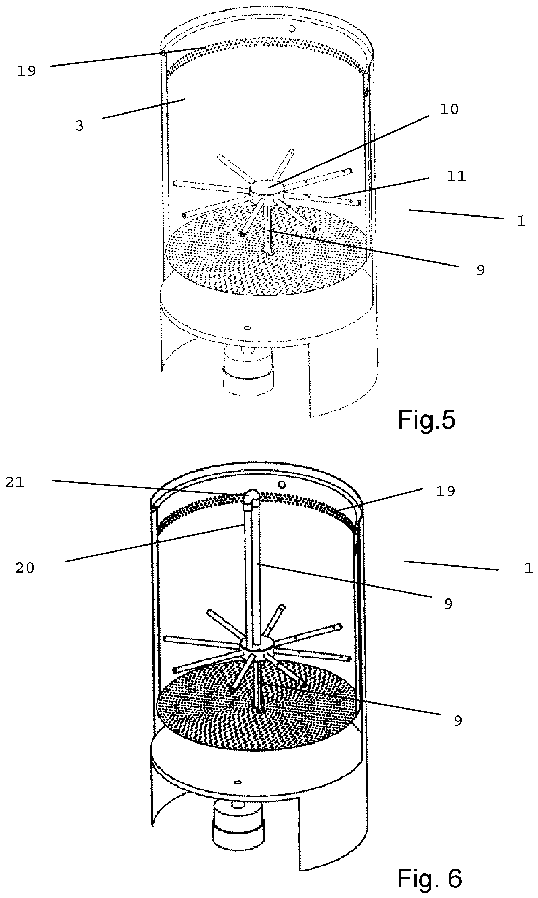

Going back to an embodiment of the kettle featuring an insert pot 3, a simplified embodiment is shown in figure 5. The second filter 5 is now arranged on the insert pot 3 itself and formed by penetrated holes, hereby named filter holes 19 in the sidewalls of the insert pot 3 corpus. The filter holes 19 are configured to filter the mash and only let the wort and fragments in the mash of a certain size go through. The wort will flow down between the kettle vessel 2 (inside) and the insert pot 3 (outside) to the bottom 6 of the kettle for being heated and recirculated in the system. The filter holes 19 are in the drawings shown as a band arranged in the top area of the insert pot 3 but this should not be considered limiting for the invention since the filter holes 19 could be arranged in every possible position on the insert pot 3 wall from the bottom to the top in such a way that the insert pot 3 forms a colander.

The embodiment of figure 5 further shows a simple version of the pump outlet function. The connection pipe 9 enters from the bottom of the kettle through the first filter 4 and connects to the distribution unit 10. The solution is simple in components and easy to assemble, disassemble and clean after use.

Figure 6 shows a variant of the embodiment of figure 5 using the distribution unit 10 as seen in the embodiment shown in figure 1 to 4. The connection pipe 9 enters from the bottom of the kettle through the first filter 4 and has a go through connection in the distribution unit 10 for making a turn to go downwards and connect fluidly with the distribution unit. This is achieved adding a tube 20 and a connection joint 21. The tube 20 and connection joint 21 can be substituted by one part in form of a flexible tube. The advantage of this embodiment is that the height of the distribution unit 10 can easily be altered to supply the heated recirculating wort into the mash in a desired height.

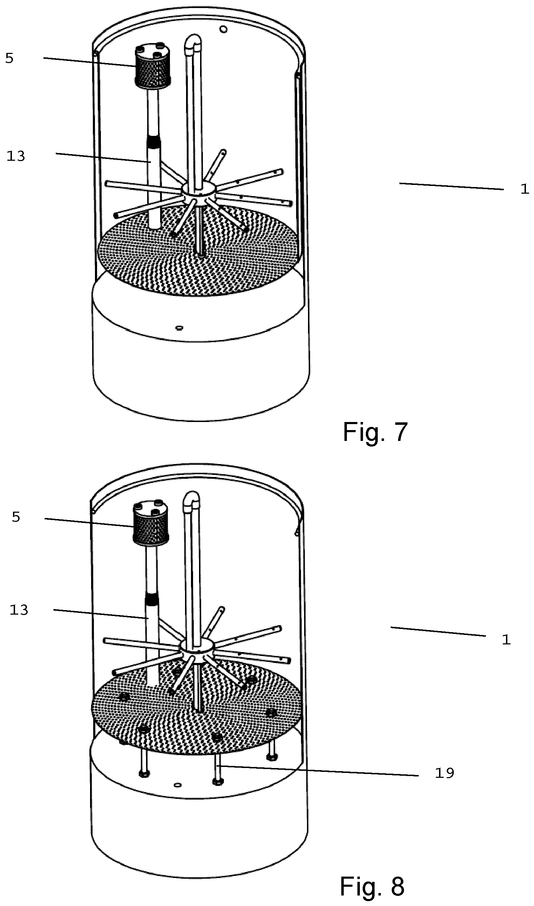

Figure 7 shows an embodiment with an alternative arrangement of the second filter 5. The second filter 5 is arranged in a position on top of the return pipe 13. The return pipe 13 goes through a hole in the first filter 4 and are secured to the first filter 4 and thus capable of returning the wort from the upper part of the kettle to the bottom of the kettle for being heated and recirculated. Figure 8 has the same features as shown in figure 7 with the difference that figure 7 shows the embodiment featuring the insert pot 3 where the embodiment in figure 8 is implemented directly in the kettle pot vessel 2 thus adding the supporting distance rods 19.

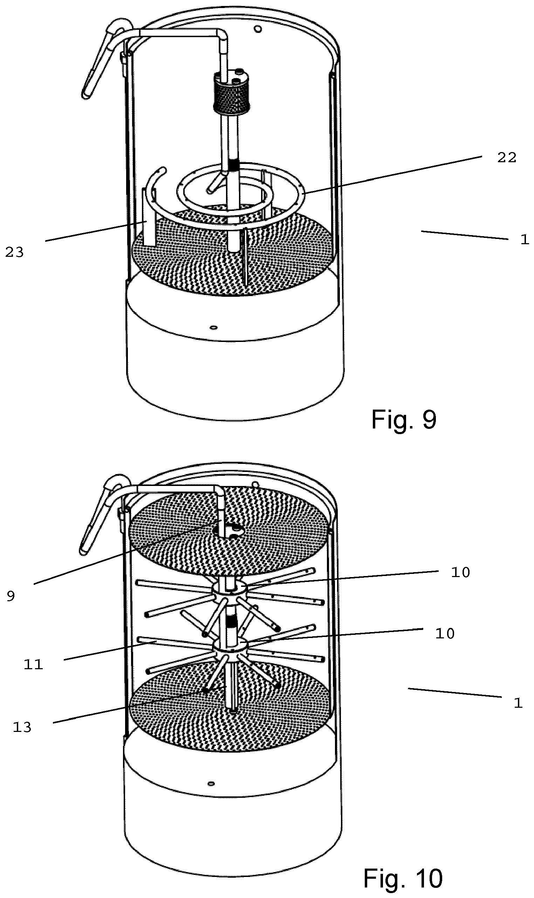

Figure 9 shows a variant of the pump output where the distribution unit 10 is omitted and where the connection pipe 9 has a bend, the bend being performed in a desired height over the bottom 6 of the kettle and therefrom being configured to having a serpentine path, forming a serpentine pipe 22 inside the kettle circumference. The serpentine pipe 22 is shown supported by support pillars 23 in the insert pot 3. The same principle could be implemented directly into the kettle pot vessel 2 if not featuring an insert pot 3. The serpentine pipe 22 is here shown having a path in the same vertical plane over the travel. However, it is envisaged that the serpentine pipe could follow a path that goes up and/or down over the travel.

Figure 10 shows an embodiment of the kettle where multiple sprinkler items are arranged on top of each other to facilitate a better brew of wort. The connection pipe 9, the distribution units 10 and the return pipe 13 has been identified but we kindly refer to the description regarding figure 1 for an explanation of the features and function.

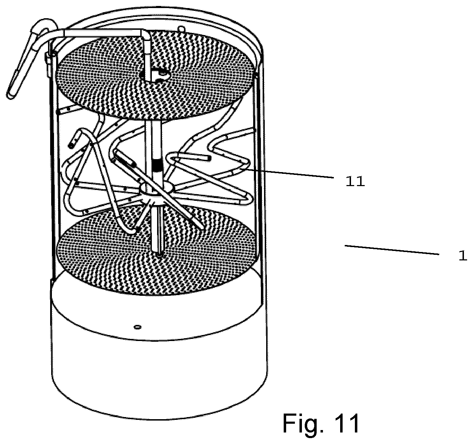

Figure 11 shows another variant of the embodiment of figure 1. The only difference is that the tubes 11 are s-formed in order to have a larger exposure to the mash.

Although various embodiments of the present invention have been described and shown, the invention is not restricted thereto, but may also be embodied in other ways within the scope of the subject-matter defined in the following claims.

## Claims

1. kettle (1) for preparing wort for brewing beer comprising:
a kettle vessel (2) having
a fixed bottom (6) and
a first filter (4) arranged inserted in a first height above the fixed bottom (6) for separating the mash and the wort and
a second filter (5) and/or a third filter (15) arranged inserted in a second height above the fixed bottom (6) for separating the mash and the wort,
the first and the second filters (4, 5):
defining a volume in the kettle between the first filter (4) and the second filter (5) configured to be filled with the mash,
defining a space in the kettle between the first filter (4) and the fixed bottom (6) for collection of wort,
where the second filter (5) is having a fluid connection (13) to the enclosure between the first filter (4) and the fixed bottom (6) of the kettle,
the kettle further comprising:
a heater arranged with the kettle in such a way that it can supply the kettle with heat,
a pump arrangement (7) arranged with the kettle for pumping the wort, the pump arrangement having:
an inlet (8) arranged between the first filter (4) and the fixed bottom (6) of the kettle and
an outlet (10, 11, 12) arranged in position between the first filter (4) and the second filter (5) in such a way as to pump the wort from the collection point and back into the mash for further permeation of the mash and extraction of desired substances from the mash into the wort.

2. A kettle according to claim 1, further comprising an insert pot (3) that are configured to fit into the kettle vessel (2) **characterized in that** said first filter (4) is comprised in the insert pot (3) and where the first filter (4) is formed in the bottom of the insert pot (3) and where the second filter (19) is formed in the sidewall of the insert pot (3) and where the insert pot (3) is configured with a stop that secures the insert pot (3) in a position in the kettle (2) where the bottom of the insert is arranged in a predefined position over the fixed bottom (6) of the kettle, so as to form a volume for collection of wort at the bottom (6) of the kettle.

3. A kettle according to claim 1, **characterized in that** the second filter (5) is a can filter where the outer part is configured as to be an inlet and where the inner part is configured as an outlet and where the filter is attached to a tube (13) for returning the wort to the enclosure between the first filter (4) and the bottom (6) of the kettle.

4. A kettle according to claim 1, **characterized in that** the first filter (4) and/or the second filter (15) is an insert to be arranged directly in the kettle vessel (2) or in the insert pot (3) and that the insert is configured as a perforated sheet of metal, plastic or rubber, a casted metal or plastic grate, a woven or nonwoven textile mesh or a wire braid.

5. A kettle according to any of claims 1 to 4, **characterized in that** the pump outlet comprises at least one distribution unit (10) with multiple ports, diffusers or nozzles, so as to accomplish a homogeneously distribution of the wort into the mash.

6. A kettle according to claim 5, **characterized in that** the kettle further comprises at least one tube (11) configured with a number of diffusers or nozzles (12), where the at least one tube (11) is adapted to interface and connect with one of the ports in the distribution unit (10) where the diffusers or nozzles (12) are arranged on the at least one tube (11) and are configured to point out from the tube (11) and are distributed over the length of the tube (11).

7. A kettle according to claim 6, **characterized in that** the at least one tube (11) adapted to interface and connect with one of the ports in the distribution unit (10) is made of glass, copper, aluminium, stainless steel or a plastic material.

8. A kettle according to claim 7, **characterized in that** the ports in the distribution unit (10) are arranged in such a way on the distribution unit (10) so as to form a star when the tubes (11) are attached.

9. A kettle according to claim 7, **characterized in that** the at least one tube (11) adapted to interface and connect with one of the ports in the distribution unit (10) is having either a straight course, a helical course or an s-formed course.

10. A kettle according to claim 6, **characterized in that** the connection pipe (9) between the pump outlet and the distribution unit (10) is routed in the kettle.

11. A kettle according to claim 6, **characterized in that** the connection pipe (9) between the pump outlet and the distribution unit (10) is routed outside the kettle and entering the kettle vessel (2, 3) from above the rim of the kettle.

12. A kettle according to claim 6, **characterized in that** the connection pipe (9) from the pump outlet to the distribution unit (10) and the return tube (13) for recirculation of the filtered wort to the pump inlet are integrated in one combined unit.

13. A kettle according to claim 6, **characterized in that** the connection pipe (9) and/or the return pipe (13) are telescopic pipes.

14. A kettle according to claim 6, **characterized in that** the kettle further comprises a compartment (14) under the kettle bottom (6) and where the pump (7) is arranged in said compartment (14).

15. A kettle according to claim 6, **characterized in that** the kettle further comprises heating means for heating the kettle, where the heating means is arranged under the bottom of the kettle or in the kettle.
